# EUROPEAN PATENT SPECIFICATION

(11) **EP 4 135 069 B1**
(45) Date of publication and mention of the grant of the patent: **11.11.2026**
(21) Application number: 22797617.2
(22) Date of filing: 19.04.2022
(51) Int. Cl.: H01M 4/139, H01M 4/1391, H01M 4/62, H01M 4/525, H01M 4/505, H01M 10/052, H01M 10/42, H01M 4/02, H01M 4/131, H01M 4/36, H01M 4/587, H01M 10/0525, H01M 4/04, H01M 4/48, H01M 4/58

(54) **PRE-DISPERSION FOR POSITIVE ELECTRODE AND POSITIVE ELECTRODE SLURRY FOR LITHIUM SECONDARY BATTERY CONTAINING THE SAME**
VORDISPERSION FÜR EINE POSITIVELEKTRODE UND POSITIVELEKTRODENAUFSCHLÄMMUNG FÜR EINE LITHIUMSEKUNDÄRBATTERIE DAMIT
PRÉ-DISPERSION POUR ÉLECTRODE POSITIVE ET SUSPENSION D'ÉLECTRODE POSITIVE POUR BATTERIE SECONDAIRE AU LITHIUM LA CONTENANT

(30) Priority: 02.06.2021 KR 20210071268; 05.04.2022 KR 20220042281
(43) Date of publication of application: 15.02.2023
(73) Proprietor: LG Energy Solution, Ltd., Seoul 07335 (KR)
(72) Inventor: PARK, Kyu Tae, Daejeon 34122 (KR); OH, Sang Seung, Daejeon 34122 (KR); KIM, Hye Hyeon, Daejeon 34122 (KR); JO, Chi Ho, Daejeon 34122 (KR)
(74) Representative: Hoffmann Eitle
(86) International application number: PCT/KR2022/005565
(87) International publication number: WO 2022/255637

(56) References cited:
- EP-A1- 3 605 678
- KR-A- 20190 064 424
- KR-A- 20190 118 506
- KR-A- 20200 066 048
- KR-A- 20210 055 586
- KR-A- 20210 055 586
- US-A1- 2016 372 784

## Description

### [Technical Field]

The present disclosure relates to a pre-dispersion for a positive electrode and positive electrode slurry for a lithium secondary battery containing the same.

The present application claims the benefit of priority based on Korean Patent Application No. 10-2021-0071268 dated June 02, 2021 and Korean Patent Application No. 10-2022-0042281 dated April 05, 2022.

### [Background Art]

As technology development and demand for mobile devices increase, the demand for secondary batteries as an energy source is rapidly increasing. Among these secondary batteries, a lithium secondary battery having a high energy density and an operating potential, a long cycle life, and a low self-discharge rate has been commercialized and widely used.

Recently, as lithium secondary batteries are used as power sources for medium and large devices such as electric vehicles, lithium secondary batteries having high capacity, high energy density, and low costs are further required, and there is a need to have a higher irreversible capacity for irreversible additives used for electrodes.

In response to this demand, conventional irreversible additives such as Li₆CoO₄ have been developed. However, the irreversible additive is structurally unstable and can generate a large amount of oxygen gas (O₂) as follows as charging of the secondary battery progresses, and the use of a high content of the irreversible additive in the positive electrode has limitations in terms of charging and discharging efficiency and safety of the lithium secondary battery:

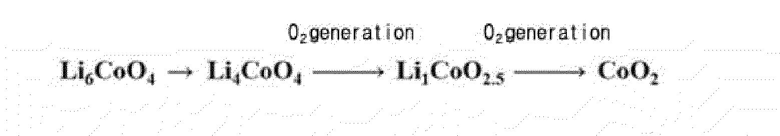

Accordingly, efforts have been made to improve the irreversibility of a lithium secondary battery by using a low content of irreversible additive. However, when the irreversible additive is used in a low content, in particular, in a small amount of less than 5% by weight based on the total weight of the positive electrode slurry, there is a problem that not only it is difficult to ensure the dispersibility in the positive electrode slurry and the electrical properties of the lithium secondary battery are lowered, but also the degree of freedom of the process design is lowered due to scattering of an irreversible additive having a low particle size during the manufacture of a positive electrode and an increase in the loss amount.

Therefore, there is a demand for a technology capable of securing the electrical properties of a lithium secondary battery by ensuring the dispersibility of the irreversible additive in the positive electrode slurry when an irreversible additive is used.

### [Related Art Document]

### [Patent Document]

Korea Patent Publication No. 10-2018-0023696

European Patent Publication 3 605 678 A1 relates to a lithium secondary battery assembled without an anode active material.

Korean Patent Publication No. 10-2021-0055586 relates to a method for manufacturing a lithium secondary battery.

### [Disclosure]

### [Technical Problem]

Accordingly, it is an object of the present technology to provide a positive electrode slurry containing a remarkably small amount of irreversible additive with high dispersibility without loss when manufacturing a positive electrode, and a positive electrode for a lithium secondary battery manufactured using the same.

### [Technical Solution]

In order to solve the above problems, the present invention as set out in the appended claims is provided.

### [Effects of the Invention]

The pre-dispersion for the positive electrode of the lithium secondary battery according to the present technology contains a positive electrode additive represented by Chemical Formula 1 in a high content, and by adjusting the area ratio of peaks present in a specific wavelength range when measuring UV-Vis absorbance, not only dispersibility and workability of the positive electrode additive in the positive electrode slurry are improved, but also side reactions that may be generated in the preparation of the positive electrode slurry can be suppressed while minimizing the loss of the positive electrode additive contained in the positive electrode slurry, so that there is an advantage that the electrical properties of the electrodes manufactured using the same are excellent.

In addition, since the pre-dispersion for a positive electrode of a lithium secondary battery can directly check the dispersibility of the positive electrode additive and whether side reactions occur when preparing the positive electrode slurry, it has the advantage of being applicable to product quality control (QC).

### [Brief Description of the Drawings]

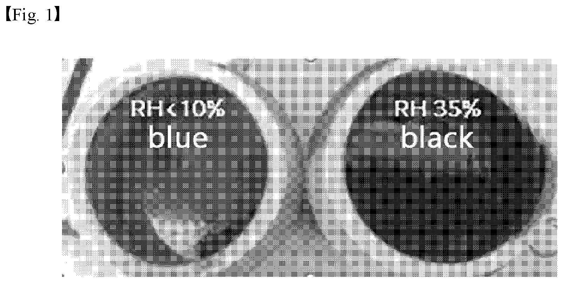

FIG. 1 is an image taken of the appearance of a pre-dispersion prepared in Example 3 and Comparative Example 5.

### [Detailed Description of the Preferred Embodiments]

Since the present invention can have various changes and can have various embodiments, specific embodiments will be described in detail in the detailed description.

However, this is not intended to limit the present invention to specific embodiments, and it should be understood to include all modifications, equivalents and substitutes included in the scope of the appended claims.

In the present invention, it is to be understood that the terms "include(s)" or "have(has)" and the like are intended to specify the presence of stated features, numbers, steps, operations, components, components or combinations thereof, but do not preclude the presence or addition of one or more other features or numbers, steps, operations, components and combinations thereof.

Further, in the present invention, when a portion of a layer, film, region, plate, etc. is described as being "on" another portion, it includes not only the case where the other portion is "directly on" but also the case where there is another portion therebetween. Conversely, when a portion of a layer, film, region, plate, etc. is described as being "under" another portion, this includes the case where there is another portion therebetween as well as "directly under" the other portion. Also, what is referred to herein as being disposed "on" may include being disposed not only on top but also on the bottom.

**In** the present invention, "color coordinate" means a coordinate in the CIE Lab color space, which is a color value defined by Commossion International de l'Eclairage (CIE), and an arbitrary position in the CIE color space can be expressed as three coordinate values L*, a*, b*.

Here, the L* value represents brightness, when L*=0, it represents black, and when L*=100, it represents white. **In** addition, the a* value indicates whether the color having the corresponding color coordinate is biased toward pure magenta or pure green, and the b* value indicates whether the color having the corresponding color coordinate is biased toward pure yellow or pure blue.

Specifically, the a* value has a range of -a* to +a*, the maximum value of a* represents (a* max) pure magenta, and the minimum value of a* (a* min) represents pure green. For example, a negative value of a* means a color biased toward pure green, and a positive value means a color biased toward pure magenta. When a*=80 and a*=50 are compared, it means that a*=80 is located closer to pure magenta than a*=50. **In** addition, the b* value has a range from -b* to +b. The maximum value of b* (b* max) represents pure yellow, and the minimum value of b* (b* min) represents pure blue. For example, a negative value of b* means a color biased toward pure blue, and a positive value means a color biased toward pure yellow. When b*=50 and b*=20 are compared, it means that b*=50 is located closer to pure yellow than b*=20.

**In** addition, in the present invention, "solid content" refers to the weight percentage of the solid material remaining after removing the solvent, based on the initial weight of the pre-dispersion for the positive electrode of the lithium secondary battery or positive electrode slurry according to the present invention. For example, when the weight of the solid material remaining after removing the solvent from 1 kg of the positive electrode slurry is 500 g, the solid content of the positive electrode slurry is 50%.

Also, in the present invention, "Ah" is a capacity unit of a lithium secondary battery, which is referred to as "ampere-hour" and means an amount of current per hour. For example, when the battery capacity is "3000 mAh", it means that it can be discharged for 1 hour with a current of 3000 mA.

Hereinafter, the present technology will be described in more detail.

### Pre-dispersion for positive electrode of lithium secondary battery

In one embodiment, the present disclosure provides a pre-dispersion for a positive electrode of a lithium secondary battery containing a positive electrode additive represented by the following Chemical Formula 1 in an amount of 0.5 parts by weight to 30 parts by weight, based on 100 parts by weight of solid content of the pre-dispersion, a first conductive material in an amount of 20 part by weight to 85 parts by weight, based on 100 parts by weight of solid content of the pre-dispersion, and a binder in an amount of 20 parts by weight to 70 parts by weight, based on 100 parts by weight of solid content of the pre-dispersion, and not containing a positive electrode active material;
wherein, when measured over a wavelength range of 350 nm to 800 nm by ultraviolet/visible (UV/Vis) absorbance spectroscopy, an area of a peak appearing in a wavelength range of 560 to 680 nm occupies 50% or more of the total peak area:

   [Chemical Formula 1] LiₚCo_{(1-q)}M¹_{q}O₄
wherein,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
5≤p≤7 and 0≤q≤0.5.

The pre-dispersion for a positive electrode of a lithium secondary battery according to the present technology contains a positive electrode additive, a first conductive material, and a binder, and does not contain a positive electrode active material. The pre-dispersion for a positive electrode according to the present technology can prevent the loss of the positive electrode additive generated by using fine particles of positive electrode additives in an amount of less than 5 parts by weight based on 100 parts of the solid content of the positive electrode slurry when preparing the positive electrode slurry, while improving the reduction in measurement accuracy with respect to the positive electrodes additive and the deterioration in workability thereby.

Here, the positive electrode additive is a lithium cobalt oxide represented by the following Chemical Formula 1:

[Chemical Formula 1] LiₚCo_{(1-q)}M¹_{q}O₄

wherein,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
5≤p≤7 and 0≤q≤0.5.

The positive electrode additive may contain lithium in excess to provide lithium for lithium consumption resulting from irreversible chemical physical reactions at the negative electrode upon initial charging, thereby increasing the charging capacity of the battery and decreasing the irreversible capacity to improve lifetime characteristics.

Among them, the positive electrode additive represented by Chemical Formula 1 has a higher content of lithium ions compared to nickel-containing oxides commonly used in the art, so that lithium ions lost due to an irreversible reaction during initial activation of the battery can be supplemented, and thus the charging and discharging capacity of the battery can be significantly improved. In addition, there is no side reaction that occurs due to the elution of transition metals during charging and discharging of the battery compared to the iron- and/or manganese-containing oxides commonly used in the art, so there is an advantage of excellent battery stability. The lithium metal oxide represented by Chemical Formula 1 may include Li₆CoO₄, Li₆Co_{0.5}Zn_{0.5}O₄, Li₆Co_{0.7}Zn_{0.3}O₄, etc.

In addition, the positive electrode additive represented by Chemical Formula 1 may have a tetragonal crystal structure, and among them, it may be included in a space group of P4₂/nmc having a twisted tetrahedral structure formed by a cobalt element and an oxygen element. Since the positive electrode additive has a twisted tetrahedral structure formed by the cobalt element and the oxygen element, it is structurally unstable, so that side reactions with moisture and/or oxygen in the air can occur under a temperature exceeding 40 °C and/or a relative humidity (RH) exceeding 10%. However, the present technology has an advantage in that the positive electrode additive can be prevented from causing a side reaction with moisture or oxygen in the air by pre-dispersing the positive electrode additive.

In addition, the first conductive material is used to improve the electrical performance of the positive electrode, and those commonly used in the art may be applied, but specifically, one or more carbon-based materials selected from the group consisting of natural graphite, artificial graphite, carbon nanotubes, graphene, carbon black, acetylene black, ketjen black, and carbon fibers may be used. For example, as the first conductive material, carbon nanotubes or graphene may be used alone or in combination.

In addition, the binder serves to bind the positive electrode active material, the positive electrode additive, and the conductive material to each other, and as long as it has such a function, it may be used without particular limitation. Specifically, the binder may include one or more resins selected from the group consisting of a polyvinylidene fluoride-hexafluoropropylene copolymer (PVdF-co-HFP), polyvinylidene fluoride (PVdF), polyacrylonitrile, polymethylmethacrylate, and copolymers thereof. As an example, the binder may include polyvinylidene fluoride.

In addition, the pre-dispersion for a positive electrode includes a positive electrode additive, a first conductive material, and a binder in a predetermined ratio based on solid content. Specifically, the pre-dispersion for a positive electrode includes 0.5 to 30 parts by weight of the positive electrode additive; 20 to 85 parts by weight of the first conductive material; and 20 to 70 parts by weight of the binder, based on 100 parts by weight of solid content.

As an example, the positive electrode additive may be included in an amount of 0.5 to 20 parts by weight; 0.5 to 18 parts by weight; 0.5 to 15 parts by weight; 0.5 to 10 parts by weight; 0.5 to 5 parts by weight; 0.5 to 3 parts by weight; 5 to 20 parts by weight; 10 to 20 parts by weight; 11 to 20 parts by weight; 20 to 30 parts by weight; or 8 to 16 parts by weight, based on 100 parts by weight of solid content of the pre-dispersion for a positive electrode.

As another example, the first conductive material may be included in an amount of 20 to 75 parts by weight; 20 to 70 parts by weight; 20 to 65 parts by weight; 20 to 50 parts by weight; 20 to 45 parts by weight; 25 to 40 parts by weight; 30 to 75 parts by weight; 35 to 75 parts by weight; 45 to 75 parts by weight; 50 to 75 parts by weight; 60 to 75 parts by weight; 25 to 65 parts by weight; 70 to 75 parts by weight; or 31 to 40 parts by weight, based on 100 parts by weight of solid content of the pre-dispersion for a positive electrode.

As another example, the binder may be included in an amount of 20 to 60 parts by weight; 20 to 45 parts by weight; 20 to 30 parts by weight; 20 to 25 parts by weight; 25 to 60 parts by weight; 25 to 45 parts by weight; 25 to 30 parts by weight; 30 to 60 parts by weight; 40 to 75 parts by weight; or 45 to 55 parts by weight, based on 100 parts by weight of solid content of the pre-dispersion for a positive electrode.

In addition, the pre-dispersion for a positive electrode may further contain a dispersion medium for dispersing the positive electrode additive, the first conductive material, and the binder. Examples of the dispersion medium include may contain one or more polar aprotic solvents of N-methyl-2-pyrrolidone (NMP), N,N-dimethyl acetamide (DMAc), dimethylformamide (DMF), dimethyl sulfoxide (DMSO), acetonitrile (ACN), acetone, ethyl acetate and distilled water. As an example, the dispersion medium may contain N-methyl-2pyrrolidone (NMP), in this case, not only the viscosity of the pre-dispersion can be easily adjusted, but also the solvent volatilization rate can be appropriately controlled so that the mixture layer does not crack due to rapid volatilization of the solvent during the manufacture of the positive electrode.

Moreover, the pre-dispersion for a positive electrode according to the present technology may exhibit a specific color, specifically, a blue-based color.

When measuring the ultravoilet/visible (UV/Vis) absorbance of the pre-dispersion according to the present technology in the wavelength range of 350-800 nm, the area of the peak appearing in the wavelength range of 560 to 680 nm occupies 50% or more of the total peak area, specifically, it may occupy 60% or more, 65% or more, 70% or more, 75% or more, 80% or more, 85% or more, or 90% or more of the total peak area. Light having a wavelength of 560 to 680 nm is light showing yellow and/or yellowish red among visible light, and the pre-dispersion according to the present technology may absorb light of a wavelength of 560 to 680 nm and reflect blue, which is its complementary color.

As another example, the pre-dispersion for the positive electrode may satisfy one or more of 20≤L and b≤20 when analyzing CIE LAB color coordinates, and more specifically, 25≤L, and b≤10; alternatively, one or more conditions of 30≤L≤80 and -80≤b≤10 may be satisfied.

As described above, the pre-dispersion for a positive electrode of a lithium secondary battery according to the present technology can not only improve the dispersibility of the positive electrode additive in the positive electrode slurry by controlling the peak area ratio of UV/Vis absorbance and the CIE LAB color coordinates, but also the side reaction that may be generated during the production of a positive electrode slurry can be suppressed while minimizing the loss of the positive electrode additive contained in the positive electrode slurry, and therefore, the electrical properties can be further improved in positive electrode slurries and lithium secondary batteries containing the same. Moreover, since the pre-dispersion for a positive electrode of a lithium secondary battery can directly check the dispersibility of the positive electrode additive and whether a side reaction occurs when preparing the positive electrode slurry, there is an advantage that it can be applied during product quality control (QC).

### Method of preparing pre-dispersion for lithium secondary battery

Further, in one embodiment, the present disclosure provides a method of preparing a pre-dispersion for a positive electrode of a lithium secondary battery as defined in claim 6, the method includes preparing a pre-dispersion by mixing a positive electrode additive represented by the following Chemical Formula 1, a first conductive material, and a binder:

[Chemical Formula 1] LiₚCo_{(1-q)}M¹_{q}O₄

wherein,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
5≤p≤7 and 0≤q≤0.5.

Here, preparing the pre-dispersion solution is a step of mixing the positive electrode additive, the conductive material and the binder, and may be carried out in a conventional manner used in the preparation of a slurry in the art. For example, the step of preparing the pre-dispersion may be carried out by adding each component to a homomixer, stirring at 1,000 to 5,000 rpm for 30 to 600 minutes, and viscosity can be controlled while adding a solvent during the stirring. As an example, for the positive electrode pre-dispersion according to the present technology, a positive electrode additive represented by Chemical Formula 1, a conductive material and a binder are introduced into a homomixer, and an N-methylpyrrolidone solvent is injected while mixing at 3,000 rpm for 60 minutes to be prepared in a form in which the viscosity at 25±1 °C is adjusted to 7,500±300 cps.

In addition, the step of preparing the pre-dispersion may be carried out under temperature and humidity conditions satisfying a specific range in order to prevent the structurally unstable positive electrode additive from being decomposed and/or damaged.

Specifically, the step of preparing the pre-dispersion may be carried out under a temperature condition of 40 °C or less, and more specifically, 10 °C to 40 °C; 10 °C to 35 °C; 10 °C to 30 °C; 10 °C to 25 °C; 10 °C to 20 °C; 15 °C to 40 °C; 20 °C to 40 °C; 15 °C to 35 °C; or 18 °C to 30 °C.

In addition, the step of preparing the pre-dispersion may be carried out under a relative humidity (RH) condition of 10% or less, and more specifically, 9% or less, 8% or less, 7% or less, 6% or less, 5% or less, 4% or less, 3% or less, 2% or less, or 1% or less.

In the present technology, by controlling the temperature and/or humidity conditions as described above during the preparation of the pre-dispersion for a positive electrode, the positive electrode additive in particulate form does not cause a side reaction with moisture and oxygen in the air in the process of mixing with the first conductive material, etc., thereby the degradation of irreversible activity can be prevented.

### Positive electrode slurry for lithium secondary battery

Furthermore, in one embodiment, the present disclosure provides:
a positive electrode slurry for a lithium secondary battery including a positive electrode active material; the above-mentioned pre-dispersion for a positive electrode; and a second conductive material.

The positive electrode slurry for a lithium secondary battery according to the present technology is a composition for manufacturing a positive electrode used in a lithium secondary battery, and contains a positive electrode active material, a positive electrode additive, and a second conductive material, and by including the above-described pre-dispersion for a positive electrode of the present technology as the positive electrode additive, not only is a small amount of the positive-electrode additive uniformly dispersed in the slurry, but also the activity of the positive electrode additive is superior to that of the positive electrode additives commonly used in the form of fine particles, and therefore, the electrical properties of positive electrodes and lithium secondary batteries including the same can be improved.

Here, the positive electrode active material is a positive electrode active material capable of reversible intercalation and deintercalation, and may include a lithium metal composite oxide represented by the following Chemical Formula 2:

[Chemical Formula 2] Liₓ[Ni_{y}Co_{z}Mn_{w}M²ᵥ]Oᵤ

wherein,
M² is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
1.0≤x≤1.30, 0≤y<0.95, 0<z≤0.5, 0<w≤0.5, 0≤v≤0.2, and 1.5≤u≤4.5.

The lithium metal composite oxide represented by Chemical Formula 2 is a composite metal oxide containing lithium and nickel, and may include one or more compounds selected from the group consisting of LiCoO₂, LiCo_{0.5}Zn_{0.5}O₂, LiCo_{0.7}Zn_{0.3}O₂, LiNiO₂, LiNi_{0.5}Co_{0.5}O₂, LiNi_{0.6}Co_{0.4}O₂, LiNi_{1/3}Co_{1/3}Al_{1/3}O₂, LiMnO₂, LiNi_{1/3}Co_{1/3}Mn_{1/3}O₂, LiNi_{0.8}Co_{0.1}Mn_{0.1}O₂, LiNi_{0.6}Co_{0.2}Mn_{0.2}O₂, LiNi_{0.9}Co_{0.05}Mn_{0.05}O₂, LiNi_{0.6}Co_{0.2}Mn_{0.1}Al_{0.1}O₂, and LiNi_{0.7}Co_{0.1}Mn_{0.1}Al_{0.1}O₂.

As an example, as the lithium metal composite oxide represented by Chemical Formula 2 included in the positive electrode active material, LiNi_{1/3}Co_{1/3}Mn_{1/3}O₂, LiNi_{0.8}Co_{0.1}Mn_{0.1}O₂, LiNi_{0.6}Co_{0.2}Mn_{0.2}O₂, LiNi_{0.8}Co_{0.1}Mn_{0.05}Al_{0.05}O₂, or LiNi_{0.6}Co_{0.2} Mn_{0.15}Al_{0.05}O₂ may be used alone or in combination.

**In** addition, the content of the positive electrode active material may be 80 to 99.5 parts by weight, specifically 85 to 95 parts by weight, 85 to 90 parts by weight, 90 to 95 parts by weight, or 86 to 95 parts by weight, based on 100 parts by weight of the total solid content of the positive electrode slurry.

At this time, the second conductive material may be used to improve the performance of the positive electrode, such as electrical conductivity, and as the second conductive material, one or more carbon-based material selected from the group consisting of natural graphite, artificial graphite, carbon black, acetylene black, ketjen black, and carbon fiber may be used. For example, as the conductive material, carbon black or acetylene black may be used alone or in combination.

**In** addition, the second conductive material may be included in an amount of 0.5 to 5 parts by weight, specifically, 0.5 to 3 parts by weight; or 0.5 to 2 parts by weight, based on 100 parts by weight of the positive electrode slurry solid content.

In the present technology, a conductive network can be formed in the positive electrode slurry by using the second conductive material in the positive electrode slurry together with the first conductive material contained in the pre-dispersion for a positive electrode, and the electrical properties of the positive electrodes manufactured thereby can be further improved.

### Method of preparing positive electrode slurry for a lithium secondary battery

In addition, in one embodiment, the present disclosure provides a method of preparing a positive electrode slurry for the above-described lithium secondary battery as defined in claim 14.

Specifically, the preparation method includes:
preparing a pre-dispersion by mixing a positive electrode additive represented by the following Chemical Formula 1, a first conductive material, and a binder; and
preparing a positive electrode slurry by mixing a positive electrode active material and a second conductive material with the prepared pre-dispersion:

   [Chemical Formula 1] LiₚCo_{(1-q)}M¹_{q}O₄
wherein,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
5≤p≤7 and 0≤q≤0.5.

Here, preparing the pre-dispersion solution is a step of mixing the positive electrode additive, the first conductive material and the binder, and may be carried out in a conventional manner used in the preparation of a slurry in the art. For example, the step of preparing the pre-dispersion may be carried out by adding each component to a homomixer, stirring at 1,000 to 5,000 rpm for 30 to 600 minutes, and viscosity can be controlled while adding a solvent during the stirring. As an example, for the positive electrode pre-dispersion according to the present technology, a positive electrode additive represented by Chemical Formula 1, a conductive material and a binder are introduced into a homomixer, and an N-methylpyrrolidone solvent is injected while mixing at 3,000 rpm for 60 minutes to be prepared in a form in which the viscosity at 25±1 °C is adjusted to 7,500±300 cps.

In addition, the step of preparing the pre-dispersion may be carried out under temperature and humidity conditions satisfying a specific range in order to prevent the structurally unstable positive electrode additive from being decomposed and/or damaged.

Specifically, the step of preparing the pre-dispersion may be carried out under a temperature condition of 40 °C or less, and more specifically, 10 °C to 40 °C; 10 °C to 35 °C; 10 °C to 30 °C; 10 °C to 25 °C; 10 °C to 20 °C; 15 °C to 40 °C; 20 °C to 40 °C; 15 °C to 35 °C; or 18 °C to 30 °C.

In addition, the step of preparing the pre-dispersion may be carried out under a relative humidity (RH) condition of 10% or less, and more specifically, 9% or less, 8% or less, 7% or less, 6% or less, 5% or less, 4% or less, 3% or less, 2% or less, or 1% or less.

In the present technology, by controlling the temperature and/or humidity conditions as described above during the preparation of the pre-dispersion for a positive electrode, the positive electrode additive in particulate form does not cause a side reaction with moisture and oxygen in the air in the process of mixing with the first conductive material, etc., thereby the degradation of irreversible activity can be prevented.

As an example, the prepared pre-dispersion may exhibit a specific color, specifically, a blue-based color by reducing a side reaction between the positive electrode additive and moisture and/or oxygen present in the air.

Accordingly, in the pre-dispersion, when measuring the UV/Vis absorbance of the pre-dispersion according to the present technology in the wavelength range of 350-800 nm, the area of the peak appearing in the wavelength range of 560 to 680 nm may occupy 50% or more of the total peak area, specifically, it may occupy 60% or more, 65% or more, 70% or more, 75% or more, 80% or more, 85% or more, or 90% or more of the total peak area. Light having a wavelength of 560 to 680 nm is light showing yellow and/or yellowish red among visible light, and the pre-dispersion according to the present technology may absorb light of a wavelength of 560 to 680 nm and reflect blue, which is its complementary color.

In addition, the pre-dispersion for the positive electrode may satisfy one or more of 20≤L and b≤20 when analyzing CIE LAB color coordinates, and more specifically, 25≤L, and b≤10; alternatively, one or more conditions of 30≤L≤80 and -80≤b≤10 may be satisfied.

In addition, the method of preparing a positive electrode slurry according to the present technology includes preparing a positive electrode slurry by mixing a positive electrode active material and a second conductive material in the pre-dispersion.

The above step is a step of mixing the positive electrode active material with the prepared pre-dispersion, and mixing at this time is not particularly limited as long as it is a method commonly applied in the art, but specifically, it can be carried out in such a manner that it is added to the pre-dispersion, together with the second conductive material, and in some cases, it is carried out by preparing a separate dispersion containing the positive electrode active material and the second conductive material and mixing the prepared dispersion with the prepared pre-dispersion.

As an example, the step of preparing of the positive electrode slurry may include preparing an active material mixed liquid by mixing a positive electrode active material and a second conductive material under atmospheric pressure; and preparing a positive electrode slurry by mixing the prepared active material mixed liquid and the pre-dispersion solution under vacuum condition.

Specifically, in the step of preparing the active material mixed liquid, the positive electrode active material and the second conductive material are mixed under atmospheric pressure (i.e., 1 atm) for 40 to 80 minutes to prepare an active material mixed liquid including the positive electrode active material, and the prepared active material mixed liquid and the previously prepared pre-dispersion liquid may be mixed under vacuum for 10 to 50 minutes to prepare a positive electrode slurry.

Here, the side reaction between the positive electrode additive included in the pre-dispersion and moisture and/or oxygen in the air may be minimized by mixing the active material mixed liquid and the pre-dispersion under vacuum conditions.

### Positive electrode for lithium secondary battery

Further, in one embodiment, the present disclosure provides a positive electrode for a lithium secondary battery including:
a positive electrode current collector; and
a positive electrode mixture layer positioned on the positive electrode current collector and prepared using the above-described positive electrode slurry.

The positive electrode for a lithium secondary battery according to the present technology includes a positive electrode mixture layer manufactured by coating, drying, and pressing a positive electrode slurry on a positive electrode current collector, and the positive electrode mixture layer has a configuration containing a positive electrode active material, a positive electrode additive represented by Chemical Formula 1, a conductive material, and a binder.

In this case, the positive electrode mixture layer has an advantage of having excellent electrical properties by being prepared using the positive electrode slurry of the present technology described above.

In addition, the average thickness of the positive electrode mixture layer is not particularly limited, and specifically may be 50 µm to 300 µm, more specifically 100 µm to 200 µm; 80 µm to 150 µm; 120 µm to 170 µm; 150 µm to 300 µm; 200 µm to 300 µm; or 150 µm to 190 µm.

In addition, in the positive electrode, as the positive electrode current collector, one having high conductivity without causing a chemical change in the battery may be used. For example, stainless steel, aluminum, nickel, titanium, calcined carbon, etc. may be used, and in the case of aluminum or stainless steel, one whose surface is treated with carbon, nickel, titanium, silver, or the like may be used. In addition, fine irregularities may be formed on the surface of the positive electrode current collector to increase the adhesion of the positive electrode active material, and various forms such as a film, a sheet, a foil, a net, a porous body, a foam, and a nonwoven body are possible. In addition, the average thickness of the current collector may be appropriately applied in a range of 3 to 500 µm in consideration of the conductivity and total thickness of the positive electrode to be manufactured.

### Lithium secondary battery

In addition, the present disclosure, in one embodiment, provides a lithium secondary battery including the positive electrode according to the present technology described above; a negative electrode; and a separator positioned between the positive electrode and the negative electrode.

The lithium secondary battery according to the present technology has a structure including a positive electrode, a negative electrode and a separator interposed between the positive electrode and the negative electrode of the present technology as described above. Since the lithium secondary battery can effectively supplement lithium ions lost due to an irreversible reaction during initial charging by having the positive electrode of the present technology described above, high capacity and a long lifespan can be realized during subsequent charging and discharging of the battery.

Here, the negative electrode is prepared by coating, drying and pressing the negative electrode active material on the negative electrode current collector, and if necessary, a conductive material as in the positive electrode, an organic binder polymer, an additive, etc. may be optionally further included.

In addition, as the negative electrode active material, for example, graphite having a completely layered crystal structure such as natural graphite, and soft carbon having a low crystallinity layered crystal structure (graphene structure; a structure in which hexagonal honeycomb planes of carbon are arranged in layers) and graphite materials such as hard carbon, artificial graphite, expanded graphite, carbon fiber, non-graphitizable carbon, carbon black, carbon nanotubes, fullerenes, activated carbon, etc. in which carbon and these structures are mixed with amorphous parts; metal complex oxides such as LixFe₂O₃(0≤x≤1), LixWO₂(0≤x≤1), SnₓMe₁₋ₓMe'_{y}O_{z} (Me: Mn, Fe, Pb, Ge; Me', Al, B, P, Si, Group 1, Group 2 and Group 3 elements of the periodic table and halogens; 0 < x ≤ 1; 1 ≤ y ≤ 3; 1≤z≤8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymers such as polyacetylene; Li-Co-Ni-based materials; titanium oxide; lithium titanium oxide and the like may be used.

As an example, the negative electrode active material may include both graphite and silicon (Si)-containing particles, and the graphite includes at least one of natural graphite having a layered crystal structure and artificial graphite having an isotropic structure, and the silicon (Si)-containing particles may include particles mainly containing silicon (Si) as a metal component, such as silicon (Si) particles, silicon oxide (SiO₂) particles, or a mixture of the silicon (Si) particles and the silicon oxide (SiO₂) particles.

At this time, the negative electrode active material may include 80 to 95 parts by weight of graphite; and 1 to 20 parts by weight of silicon (Si)-containing particles, based on a total of 100 parts by weight. The present technology can improve the charge capacity per unit mass while reducing the lithium consumption and irreversible capacity loss during initial charging/discharging of the battery by adjusting the content of graphite and silicon (Si)-containing particles contained in the negative electrode active material to the above range.

In addition, the negative electrode mixture layer may have an average thickness of 100 µm to 200 µm, specifically, 100 µm to 180 µm, 100 µm to 150 µm, 120 µm to 200 µm, 140 µm to 200 µm, or 140 µm to 160 µm.

**In** addition, the negative electrode current collector is not particularly limited as long as it has high conductivity without causing a chemical change in the battery, and for example, copper, stainless steel, nickel, titanium, calcined carbon, etc. may be used, and in the case of copper or stainless steel, one whose surface is treated with carbon, nickel, titanium, silver, etc. may be used. **In** addition, the negative electrode current collector, like the positive electrode current collector, may have fine irregularities formed on the surface thereof to strengthen the bonding force with the negative electrode active material, and may take various forms such as films, sheets, foils, nets, porous materials, foams, non-woven materials, etc. **In** addition, the average thickness of the negative electrode current collector may be appropriately applied in a range of 3 to 500 µm in consideration of the conductivity and total thickness of the negative electrode to be manufactured.

**In** addition, the separator is interposed between the negative electrode and the positive electrode, and an insulating thin film having high ion permeability and mechanical strength is used. Although the separator is not particularly limited as long as it is conventionally used in the art, specifically, a sheet or nonwoven fabric made of chemical-resistant and hydrophobic polypropylene; glass fiber; polyethylene or the like may be used, and in some cases, a composite separator in which a porous polymer substrate such as a sheet or nonwoven fabric is coated with inorganic particles/organic particles by an organic binder polymer may be used. When a solid electrolyte such as a polymer is used as the electrolyte, the solid electrolyte may also serve as a separator. In addition, the separator may have an average pore diameter of 0.01 to 10 µm, and an average thickness of 5 to 300 µm.

Meanwhile, the positive electrode and the negative electrode may be wound in the form of a jelly roll and accommodated in a cylindrical battery, a prismatic battery, or a pouch-type battery, or may be accommodated in a pouch-type battery in a folding or stack-and-folding form, but is not limited thereto.

In addition, a lithium salt-containing electrolyte according to the present technology may consist of an electrolyte and a lithium salt, and as the electrolyte, a non-aqueous organic solvent, an organic solid electrolyte, an inorganic solid electrolyte, and the like may be used.

As the non-aqueous organic solvent, for example, an aprotic organic solvent such as N-methyl-2-pyrrolidinone, ethylene carbonate, propylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxymethane, a dioxolane derivative, sulfolane, methyl sulfolane, 1,3-dimethyl-2-imidazolidinone, a propylene carbonate derivative, a tetrahydrofuran derivative, ether, methyl propionate or ethyl propionate may be used.

As the organic solid electrolyte, for example polyethylene derivatives, polyethylene oxide derivatives, polypropylene oxide derivatives, phosphoric acid ester polymers, poly alginate lysine, polyester sulfide, polyvinyl alcohol, polyvinylidene fluoride, a polymeric material including an ionic dissociating group and the like may be used.

As the inorganic solid electrolyte, nitrides, halides, sulfates, and the like of Li, such as Li₃N, LiI, Li₅Ni₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂ may be used.

The lithium salt is a material that is easily soluble in the non-aqueous electrolyte, and for example, LiCl, LiBr, LiI, LiClO₄, LiBF₄, LiB10Cl₁₀, LiPF₆, LiCF₃SO₃, LiCF₃CO₂, LiAsF₆, LiSbF₆, LiAlCl₄, CH₃SO₃Li, (CF₃SO₂)₂NLi, chloroborane lithium, lithium lower aliphatic carboxylates, lithium 4-tetraphenylboronate, lithium imide and the like may be used.

In addition, for the purpose of improving charging/discharging characteristics, flame retardancy, etc., for example, pyridine, triethylphosphite, triethanolamine, cyclic ether, ethylene diamine, n-glyme, hexamethyl phosphate triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, aluminum trichloride and the like may be added to the electrolyte. In some cases, in order to impart incombustibility, a halogen-containing solvent such as carbon tetrachloride and ethylene trifluoride may be further included, and carbon dioxide gas may be further included to improve high temperature storage characteristics, and fluoro-ethylene carbonate (FEC), propene sultone (PRS), etc. may be further included.

Hereinafter, the present disclosure will be described in detail by way of Examples.

However, the following Examples and Experimental Examples are merely illustrative of the present technology, and the content of the present technology is not limited to the following Examples and Experimental Examples.

### Examples 1 to 3 and Comparative Examples 1 to 5: Preparation of pre-dispersion for positive electrode of lithium secondary battery

Li₆Co_{0.7}Zn_{0.3}O₄ as a positive electrode additive; carbon nanotubes as a first conductive material; and PVdF (weight average molecular weight (Mw): 500,000 ± 25,000) as a binder were prepared, weighed as shown in Table 1 below, put in a homo mixer, and then mixed at 2,000 rpm for 30 minutes to prepare a pre-dispersion for the positive electrode of the lithium secondary battery. At this time, the mixing temperature and humidity were adjusted as shown in Table 1 below.

**[Table 1]**

| Units: Parts by weight | Example 1 | Example 2 | Example 3 | Comparative Example 1 | Comparative Example 2 | Comparative Example 3 | Comparative Example 4 | Comparative Example 5 |
|---|---|---|---|---|---|---|---|---|
| Positive Electrode Additive | 2 | 29 | 12 | 0.1 | 67 | 12 | 12 | 12 |
| First conductive material | 39 | 29 | 44 | 40 | 13 | 44 | 44 | 44 |
| Binder | 59 | 42 | 44 | 59.9 | 20 | 44 | 44 | 44 |
| Total | 100 | 100 | 100 | 100 | 100 | 100 | 100 | 100 |
| Temperature [°C] | 20 to 25 | 20 to 25 | 20 to 25 | 20 to 25 | 20 to 25 | 0 to 5 | 45 to 50 | 20 to 25 |
| Humidity[%] | 3% | 3% | 3% | 3% | 3% | 3% | 3% | 35% |

### Examples 4 to 6 and Comparative Examples 6 to 10: Manufacture of positive electrode for lithium secondary battery

LiNi_{0.6}Co_{0.2}Mn_{0.2}O₂ as a positive electrode active material; and carbon black as a second conductive material were prepared, weighed as shown in Table 2 below, put into a homo mixer, an N-methylpyrrolidone solvent was injected, and the active material mixed liquid was prepared at 2,500 rpm at atmospheric pressure (1 atm) for 60 minutes. The prepared mixed liquid and the pre-dispersion for a positive electrode prepared in Examples 1 to 3 and Comparative Examples 1 to 5 above; and carbon black as a second conductive material were prepared, weighed as shown in Table 2 below, put into a homomixer, an N-methylpyrrolidone solvent was injected, and primary mixing was carried out at 2,500 rpm for 60 minutes. Thereafter, secondary mixing was carried out by mixing at 2,500 rpm for 30 minutes under vacuum conditions to prepare a positive electrode slurry for a lithium secondary battery.

**[Table 2]**

| Units: Parts by weight | | Example 4 | Example 5 | Example 6 | Comparative Example 6 | Comparative Example 7 | Comparative Example 8 | Comparative Example 9 | Comparative Example 10 |
|---|---|---|---|---|---|---|---|---|---|
| Positive electrode active material | | 92 | 92 | 92 | 92 | 94 | 92 | 92 | 92 |
| Pre-dispersion | Type | Example 1 | Example 2 | Example 3 | Comparative Example 1 | Comparative Example 2 | Comparative Example 3 | Comparative Example 4 | Comparative Example 5 |
| | Content | 7 | 7 | 7 | 7 | 5 | 7 | 7 | 7 |
| Second | | 1 | 1 | 1 | 1 | 1 | 1 | 1 | 1 |
| conductive material | | | | | | | | | |
| Total | 100 | 100 | 100 | 100 | 100 | 100 | 100 | 100 | |

### Comparative Example 11: Manufacture of positive electrode for lithium secondary battery

An N-methylpyrrolidone solvent was injected into a homo mixer, and 92 parts by weight of LiNi_{0.6}Co_{0.2}Mn_{0.2}O₂ as a positive electrode active material; 0.85 parts by weight of Li₆Co_{0.7}Zn_{0.3}O₄ as a positive electrode additive; 3.08 parts by weight of carbon nanotubes as a first conductive material; 1 part by weight of acetylene black as a second conductive material; and 3.08 parts by weight of PVdF (weight average molecular weight (Mw): 500,000±25,000) as a binder were weighed and put into a homo mixer, and then mixed at 3,000 rpm for 60 minutes to prepare a positive electrode slurry.

### Experimental Example 1: Evaluation of pre-dispersion for positive electrode

In order to evaluate the performance of the pre-dispersion for a positive electrode of a lithium secondary battery, the following experiment was carried out.

### A) UV/Vis absorbance measurement

Colors of the pre-dispersions prepared in Examples 1 to 3 and Comparative Examples 1 to 5 were visually observed. Then, light absorption spectra were measured in the wavelength range of 350 to 800 nm for the pre-dispersions using UV-Vis spectroscopy. The area of peaks in the measured spectrum (A), the total area of peaks in the 560 to 680 nm wavelength range (B), and the area of the peak with the strongest intensity among the peaks in the 560 to 680 nm wavelength range (C) were calculated, respectively, and the total area ratio (B/A*100) of the peaks present in the 560 to 680 nm wavelength range and the area ratio of the peak with the strongest intensity (C/A* 100) were derived and are shown in Table 3 below.

### B) CIE LAB color coordinate measurement

Color coordinates in the CIE LAB color space were measured for the pre-dispersions prepared in Examples 1 to 3 and Comparative Examples 1 to 5 using a chromameter, and the results are shown in Table 3 below.

**[Table 3]**

| | UV/Vis absorbance peak area | | CIE LAB color space coordinates | | |
|---|---|---|---|---|---|
| | B/A*100 | C/A*100 | L* | a* | b* |
| Example 1 | > 85% | > 80% | 38.3 | 11.5 | -56.1 |
| Example 2 | > 85% | > 80% | 42.2 | -14.3 | -4.4 |
| Example 3 | > 85% | > 80% | 62.5 | -24 | -12.9 |
| Comparative Example 1 | | | | | |
| | < 50% | < 45% | 29 | 6.15 | -42.5 |
| Comparative Example 2 | | | | | |
| | < 70% | < 68% | 9.4 | -17.7 | 9.3 |
| Comparative Example 3 | | | | | |
| | < 50% | < 48% | 21 | 4.9 | -51.3 |
| Comparative Example 4 | | | | | |
| | < 30% | < 25% | 3.9 | -21 | -7.1 |
| Comparative Example 5 | | | | | |
| | < 30% | < 25% | 1.1 | -34 | -16.8 |

As shown in Table 3, it was confirmed that the pre-dispersion for a positive electrode according to the present technology exhibited a blue color when observed visually (such as Example 3 in the Figure), and it was confirmed that the area of the peak present in the wavelength range of 560 to 680 nm when measuring UV/Vis absorbance was more than 50% of the total peak area, and the coordinates in the CIE LAB space satisfied 20≤L and b≤20. On the other hand, it was confirmed that the color of the pre-dispersions of Comparative Examples was black or blue close to black (such as Comparative Example 5 in the Figure), and did not satisfy both the UV/Vis absorbance peak and CIE LAB color space coordinate conditions.

### Experimental Example 2: Lithium secondary battery evaluation

The positive electrode slurry manufactured in Examples 4 to 6 and Comparative Examples 6 to 11 was applied to one side of an aluminum current collector, dried at 100° C, and rolled to manufacture a positive electrode. At this time, the total thickness of the positive electrode mixture layer was 130 µm, and the total thickness of the manufactured positive electrode was about 200 µm.

In addition, natural graphite and silicon (SiOx, provided that 1≤x≤2) particles as a negative electrode active material; and styrene butadiene rubber (SBR) as a binder were prepared, and the negative electrode slurry was prepared in the same manner as the positive electrode slurry with reference to Tables 1 and 2. At this time, the graphite used in the preparation of the negative electrode mixture layer was natural graphite (average particle size: 0.01 to 0.5 µm), and silicon (SiOx) particles having an average particle size of 0.9 to 1.1 µm were used. The prepared negative electrode slurry was applied to one side of a copper current collector, dried at 100 °C, and rolled to manufacture a negative electrode. At this time, the total thickness of the negative electrode mixture layer was 150 µm, and the total thickness of the manufactured negative electrode was about 250 µm.

Then, a separator (thickness: about 16 µm) made of a porous polyethylene (PE) film was interposed between the manufactured positive electrode and the negative electrode, and E2DVC was injected as an electrolyte to manufacture a cell in the form of a full cell.

Here, "E2DVC" is a kind of carbonate-based electrolyte, and means a solution obtained by mixing lithium hexafluorophosphate (LiPF₆, 1.0M) and vinyl carbonate (VC, 2% by weight) in a mixture of ethylene carbonate (EC):dimethyl carbonate (DMC):diethyl carbonate (DEC)=1:1:1 (volume ratio).

In order to evaluate the performance of the positive electrode additive according to the present technology, the following experiment was carried out using the thus-prepared lithium secondary battery cell.

### A) Measurement of the amount of oxygen gas generated during charging and discharging

For the lithium secondary batteries manufactured using the positive electrode slurries of Examples and Comparative Examples, initial charging (formation) was proceeded at 55 °C under the conditions of 3.5 V and 1.0 C, and the gas generated at the positive electrode was degassed while performing the initial charging to analyze the content of oxygen gas generated during the initial charging. Then, charging and discharging were repeatedly carried out 50 times at 45 °C under 0.3 C conditions to further analyze the content of the oxygen gas generated due to electrolyte decomposition during each charging/discharging, and the analyzed results are shown in Table 4 below.

### B) Evaluation of charging/discharging capacity and retention rate of lithium secondary battery

For the lithium secondary batteries manufactured using the positive electrode slurries of Examples and Comparative Examples, charging was performed at a temperature of 25 °C with a charging current of 0.1 C to a charging cut-off voltage of 4.2 to 4.25 V, and charging was performed until the current density at the cut-off voltage was 0.01 C for activation. Then, it was discharged to a cut-off voltage of 2 V with a discharge current of 0.1 C, and the initial charging/discharging capacity per unit mass was measured.

Then, the charging and discharging capacity was measured while repeatedly performing charging and discharging 50 times at 45 °C under 0.3 C conditions, and the charging/discharging capacity retention rate was calculated after performing charging and discharging 50 times. The results are shown in Table 4 below.

**[Table 4]**

| | Oxygen gas generation [ml/g] | | Initial charging/dischar ging capacity [Ah] | Capacity retention rate after 50 cycles of repeated charging/discharging [%] |
|---|---|---|---|---|
| | 1 cycle of charging/disc harging | 50 cycles of repeated charging/disch arging | | |
| Example 4 | 86 | 11 | 103.3 | 92.9% |
| Example 5 | 109 | 12 | 103.2 | 92.5% |
| Example 6 | 92 | 10 | 105.1 | 91.4% |
| Comparative Example 6 | 67 | 9 | 100.2 | 88.9% |
| Comparative Example 7 | 129 | 45 | 105.4 | 90.6% |
| Comparative Example 8 | 71 | 32 | 103.1 | 87.2% |
| Comparative Example 9 | 55 | 26 | 100.6 | 90.0% |
| Comparative Example 10 | 52 | 20 | 100.5 | 89.1% |
| Comparative Example 11 | 89 | 68 | 102.3 | 86.9% |

As shown in Table 4, it can be seen that the lithium secondary battery manufactured using the positive electrode pre-dispersion according to the present invention has a small amount of oxygen gas generated after initial charging/discharging, and has excellent initial charging/discharging capacity and an excellent capacity retention rate.

Specifically, the lithium secondary batteries of Examples generate oxygen gas of 80 to 110 ml/g during initial charging and discharging, and it was found that the amount of oxygen gas generated during subsequent charging and discharging is significantly reduced. This means that a small amount of the positive electrode additive contained in the positive electrode mixture layer has high irreversible activity and is uniformly dispersed, thereby participating in most irreversible reactions during initial charging and discharging. In addition, the lithium secondary batteries of Examples were found to exhibit an initial charging and discharging capacity of 103 Ah or more and a high capacity retention rate of 91% or more, which indicates that the positive electrode additive contained in a positive electrode mixture layer has high irreversible activity to effectively replenish lithium ions lost due to an irreversible reaction during initial charging and discharging.

From these results, it can be seen that the pre-dispersion for a positive electrode according to the present invention contains a high content of the positive electrode additive represented by Chemical Formula 1 and has a configuration in which the area ratio of a peak present in a specific wavelength range is controlled in UV-Vis absorbance measurement, so that not only dispersibility of the positive electrode additive in the positive electrode slurry and workability during the preparation of the positive electrodes slurry can be improved, but also a side reaction that may be generated at the occasion of producing a positive electrodes slurries can be suppressed while minimizing the loss of a positive electrode additive during the production of a positive electrode slurry, thereby maintaining the high activity of the positive electrode additive.

While the foregoing has been described with reference to preferred embodiments of the present invention, it should be understood by those skilled in the art or by those of ordinary skill in the art that various changes and modifications can be made within the scope of the appended claims.

Accordingly, the technical scope of the present invention should not be limited to the content described in the detailed description of the specification, but should be defined by the claims.

## Claims

1. A pre-dispersion for a positive electrode of a lithium secondary battery comprising:
a positive electrode additive represented by the following Chemical Formula 1 in an amount of 0.5 parts by weight to 30 parts by weight, based on 100 parts by weight of solid content of the pre-dispersion;
a first conductive material in an amount of 20 part by weight to 85 parts by weight, based on 100 parts by weight of solid content of the pre-dispersion; and
a binder in an amount of 20 parts by weight to 70 parts by weight, based on 100 parts by weight of solid content of the pre-dispersion,
and not containing a positive electrode active material;
wherein, when measured over a wavelength range of 350 nm to 800 nm by ultraviolet/visible (UV/Vis) absorbance spectroscopy, an area of a peak appearing in a wavelength range of 560 to 680 nm occupies 50% or more of the total peak area:
[Chemical Formula 1] LiₚCo_{(1-q)}M¹_{q}O₄
wherein,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
5≤p≤7 and 0≤q≤0.5.

2. The pre-dispersion of claim 1, wherein the first conductive material includes one or more selected from the group consisting of natural graphite, artificial graphite, carbon nanotubes, graphene, acetylene black, carbon black, Ketjen black, and carbon fibers.

3. The pre-dispersion of claim 1, wherein the first conductive material includes one or more of carbon nanotubes and graphene.

4. The pre-dispersion of claim 1, wherein the positive electrode additive has a tetragonal structure with a space group of P4₂/nmc.

5. The pre-dispersion of claim 1, wherein the pre-dispersion satisfies two or more of 0≤L, - 30≤a≤30, and b≤20, where L, a, and b are coordinates in the Commossion International de l'Eclairage (CIE) Lab color space which define a color value of the pre-dispersion.

6. A method of manufacturing a pre-dispersion for a positive electrode of a lithium secondary battery according to claim 1, comprising:
mixing a positive electrode additive represented by the following Chemical Formula 1, a first conductive material, and a binder to prepare the pre-dispersion according to claim 1.

7. The method according to claim 6, wherein mixing is performed in at a temperature condition of 40 °C or less.

8. The method of claim 6, wherein the step of preparing the pre-dispersion is carried out at a relative humidity condition of 10% or less.

9. A positive electrode slurry for a lithium secondary battery, comprising:
a positive electrode active material; the pre-dispersion of claim 1; and a second conductive material.

10. The positive electrode slurry of claim 9, wherein the positive electrode active material is a lithium metal composite oxide represented by the following Chemical Formula 2:
[Chemical Formula 2] Liₓ[Ni_{y}Co_{z}Mn_{w}M²ᵥ]Oᵤ
wherein,
M² is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
1.0≤x≤1.30, 0≤y<0.95, 0<z≤0.5, 0<w≤0.5, 0≤v≤0.2, and 1.5≤u≤4.5.

11. The positive electrode slurry of claim 9, wherein the positive electrode active material is present in an amount of 80 to 99.5 parts by weight, based on 100 parts by weight of solid content of the positive electrode slurry.

12. The positive electrode slurry of claim 9, wherein the second conductive material is present in an amount of 0.5 to 5 parts by weight, based on 100 parts by weight of solid content of the positive electrode slurry.

13. The positive electrode slurry of claim 9, wherein the second conductive material includes one or more selected from the group consisting of natural graphite, artificial graphite, acetylene black, carbon black, Ketjen black, and carbon fibers.

14. A method of preparing a positive electrode slurry for a lithium secondary battery, comprising: mixing a positive electrode active material, a second conductive material, and the pre-dispersion according to claim 1 to prepare a positive electrode slurry.

15. The method of claim 14, wherein mixing to preparing the positive electrode slurry further comprised:
mixing the positive electrode active material and the second conductive material under atmospheric pressure to prepare an active material mixed liquid; and
mixing the active material mixed liquid and the pre-dispersion under a vacuum to prepare the positive electrode slurry.

## Patentansprüche

1. Prä-Dispersion für eine positive Elektrode einer Lithium-Sekundärbatterie, umfassend:
ein Positivelektroden-Additiv, dargestellt durch die folgende chemische Formel 1, in einer Menge von 0,5 Gewichtsteilen bis 30 Gewichtsteilen, bezogen auf 100 Gewichtsteile der festen Inhaltsstoffe der Prä-Dispersion;
ein erstes leitfähiges Material in einer Menge von 20 Gewichtsteilen bis 85 Gewichtsteilen, bezogen auf 100 Gewichtsteile der festen Inhaltsstoffe der Prä-Dispersion; und
ein Bindemittel in einer Menge von 20 Gewichtsteilen bis 70 Gewichtsteilen, bezogen auf 100 Gewichtsteile der festen Inhaltsstoffe der Prä-Dispersion,
und nicht enthaltend ein Positivelektroden-Aktivmaterial;
worin, wenn über einen Wellenlängenbereich von 350 nm bis 800 nm mittels Ultraviolett/sichtbarer(U/Vis)-Absorptionsspektroskopie gemessen wird, die Fläche eines Peaks, der in einem Wellenlängenbereich von 560 bis 680 nm liegt, 50 % oder mehr der Gesamt-Peakfläche ausmacht:
[Chemische Formel 1] LiₚCo_{(1-q)}M¹_{q}O₄
worin
M¹ eines oder mehrere Elemente ist, ausgewählt aus der Gruppe bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, und
5≤p≤7 und 0≤q≤0,5.

2. Prä-Dispersion gemäß Anspruch 1, worin das erste leitfähige Material eines oder mehrere umfasst, ausgewählt aus der Gruppe bestehend aus natürlichem Graphit, künstlichem Graphit, Kohlenstoff-Nanoröhrchen, Graphen, Acetylenruß, Ruß, Ketjen-Ruß und Kohlefasern.

3. Prä-Dispersion gemäß Anspruch 1, worin das erste leitfähige Material eines oder mehr von Kohlenstoff-Nanoröhrchen und Graphen umfasst.

4. Prä-Dispersion gemäß Anspruch 1, worin das Positivelektroden-Additiv eine tetragonale Struktur der Raumgruppe P4₂/nmc aufweist.

5. Prä-Dispersion gemäß Anspruch 1, worin die Prä-Dispersion zwei oder mehr von 0≤L, -30≤a≤30 und b≤20 erfüllt, worin L, a und b die Koordinaten im Commossion International de l'Eclairage (CIE)-Labor-Farbraum sind, die einen Farbwert der Prä-Dispersion definieren.

6. Verfahren zur Herstellung einer Prä-Dispersion für eine positive Elektrode einer Lithium-Sekundärbatterie gemäß Anspruch 1, umfassend:
Mischen eines durch die folgende chemische Formel 1 dargestellten Positivelektroden-Additivs, eines ersten leitfähigen Materials und eines Bindemittels, um eine Prä-Dispersion gemäß Anspruch 1 herzustellen.

7. Verfahren gemäß Anspruch 6, worin das Mischen bei einer Temperatur von 40°C oder niedriger durchgeführt wird.

8. Verfahren gemäß Anspruch 6, worin der Schritt zum Herstellen der Prä-Dispersion bei einer relativen Luftfeuchtigkeit von 10 % oder weniger durchgeführt wird.

9. Positivelektroden-Aufschlämmung für eine Lithium-Sekundärbatterie, umfassend:
ein Positivelektroden-Aktivmaterial, die Prä-Dispersion gemäß Anspruch 1; und ein zweites leitfähiges Material.

10. Positivelektroden-Aufschlämmung gemäß Anspruch 9, worin das Positivelektroden-Aktivmaterial ein Lithium-Metallkompositoxid ist, dargestellt durch die folgende chemische Formel 2:
[Chemische Formel 2] Liₓ[Ni_{y}Co_{z}Mn_{w}M²ᵥ)Oᵤ
worin
M² zumindest ein Element ist, ausgewählt aus der Gruppe, bestehend aus W, Cu, Fe, V, Cr, Ti, Zr, Zn, Al, In, Ta, Y, La, Sr, Ga, Sc, Gd, Sm, Ca, Ce, Nb, Mg, B und Mo,
1,0≤x≤1,30, 0≤y<0,95, 0<z≤0,5, 0<ws≤0,5, 0≤v≤0,2 und 1,5≤u≤4,5.

11. Positivelektroden-Aufschlämmung gemäß Anspruch 9, worin das Positivelektroden-Aktivmaterial in einer Menge von 80 bis 99,5 Gewichtsteilen vorliegt, bezogen auf 100 Gewichtsteile der festen Inhaltsstoffe der Positivelektroden-Aufschlämmung.

12. Positivelektroden-Aufschlämmung gemäß Anspruch 9, worin das zweite leitfähige Material in einer Menge von 0,5 bis 5 Gewichtsteilen vorliegt, bezogen auf 100 Gewichtsteile der festen Inhaltsstoffe der Positivelektroden-Aufschlämmung.

13. Positivelektroden-Aufschlämmung gemäß Anspruch 9, worin das zweite leitfähige Material eines oder mehrere umfasst, ausgewählt aus der Gruppe bestehend aus natürlichem Graphit, künstlichem Graphit, Acetylenruß, Ruß, Ketjen-Ruß und Kohlefasern.

14. Verfahren zur Herstellung einer Positivelektroden-Aufschlämmung für eine Lithium-Sekundärbatterie, umfassend:
Mischen eines Positivelektroden-Aktivmaterials, eines zweiten leitfähigen Materials und der Prä-Dispersion gemäß Anspruch 1, um eine Positivelektroden-Aufschlämmung herzustellen.

15. Verfahren gemäß Anspruch 14, worin das Mischen zur Herstellung der Positivelektroden-Aufschlämmung ferner umfasst:
Mischen des Positivelektroden-Aktivmaterials und des zweiten leitfähigen Materials unter Atmosphärendruck, um eine gemischte Aktivmaterial-Flüssigkeit herzustellen; und
Mischen der gemischten Aktivmaterial-Flüssigkeit und der Prä-Dispersion unter reduziertem Druck, um eine Positivelektroden-Aufschlämmung herzustellen.

## Revendications

1. Pré-dispersion pour une électrode positive d'une batterie secondaire au lithium comprenant :
un additif d'électrode positive représenté par la formule chimique 1 suivante en une quantité de 0,5 partie en poids à 30 parties en poids, sur la base de 100 parties en poids de teneur en solides de la pré-dispersion ;
un premier matériau conducteur en une quantité de 20 parties en poids à 85 parties en poids, sur la base de 100 parties en poids de teneur en solides de la pré-dispersion ; et
un liant en une quantité de 20 parties en poids à 70 parties en poids, sur la base de 100 parties en poids de teneur en solides de la pré-dispersion,
et ne contenant pas de matériau actif d'électrode positive ;
dans laquelle, lorsqu'elle est mesurée sur une plage de longueurs d'onde de 350 nm à 800 nm par spectroscopie d'absorbance ultraviolet/visible (UV/Vis), une aire d'un pic apparaissant dans une plage de longueurs d'onde de 560 à 680 nm occupe 50 % ou plus de l'aire totale du pic :
[Formule Chimique 1] LiₚCo_{(1-Q)}M¹_{q}O₄
dans laquelle,
M¹ est un ou plusieurs éléments sélectionnés dans le groupe constitué de W, Cu, Fe, V, Cr, Ti, Zr, Zn, Al, In, Ta, Y, La, Sr, Ga, Sc, Gd, Sm, Ca, Ce, Nb, Mg, B et Mo, et
5≤p≤7 et 0≤q≤0,5.

2. Pré-dispersion selon la revendication 1, dans laquelle le premier matériau conducteur inclut un ou plusieurs éléments sélectionnés dans le groupe constitué de graphite naturel, graphite artificiel, nanotubes de carbone, graphène, noir d'acétylène, noir de carbone, Ketjen black et fibres de carbone.

3. Pré-dispersion selon la revendication 1, dans laquelle le premier matériau conducteur inclut un ou plusieurs éléments parmi des nanotubes de carbone et du graphène.

4. Pré-dispersion selon la revendication 1, dans laquelle l'additif d'électrode positive présente une structure tétragonale avec un groupe spatial de P4₂/nmc.

5. Pré-dispersion selon la revendication 1, dans laquelle la pré-dispersion satisfait deux critères ou plus parmi 0≤L, -30≤a≤30 et b≤20, où L, a et b sont des coordonnées dans l'espace colorimétrique Lab de la Commission Internationale de l'Éclairage (CIE) qui définissent une valeur de couleur de la pré-dispersion.

6. Procédé de fabrication d'une pré-dispersion pour une électrode positive d'une batterie secondaire au lithium selon la revendication 1, comprenant :
le fait de mélanger un additif d'électrode positive représenté par la formule chimique 1 suivante, un premier matériau conducteur et un liant pour préparer la pré-dispersion selon la revendication 1.

7. Procédé selon la revendication 6, dans lequel le mélange est effectué à une condition de température de 40 °C ou moins.

8. Procédé selon la revendication 6, dans lequel l'étape de préparation de la pré-dispersion est mise en œuvre à une condition d'humidité relative de 10 % ou moins.

9. Suspension d'électrode positive pour une batterie secondaire au lithium, comprenant :
un matériau actif d'électrode positive ; la pré-dispersion selon la revendication 1 ; et un deuxième matériau conducteur.

10. Suspension d'électrode positive selon la revendication 9, dans laquelle le matériau actif d'électrode positive est un oxyde composite de lithium métallique représenté par la formule chimique 2 suivante :
[Formule Chimique 2] Liₓ[Ni_{y}Co₂Mn_{w}M²ᵥ]Oᵤ
dans laquelle,
M² est au moins un élément sélectionné dans le groupe constitué de W, Cu, Fe, V, Cr, Ti, Zr, Zn, Al, In, Ta, Y, La, Sr, Ga, Sc, Gd, Sm, Ca, Ce, Nb, Mg, B et Mo,
1,0≤x≤1,30, 0≤y<0,95, 0<z≤0,5, 0<w≤0,5, 0≤v≤0,2 et 1,5≤u≤4,5.

11. Suspension d'électrode positive selon la revendication 9, dans laquelle le matériau actif d'électrode positive est présent en une quantité de 80 à 99,5 parties en poids, sur la base de 100 parties en poids de teneur en solides de la suspension d'électrode positive.

12. Suspension d'électrode positive selon la revendication 9, dans laquelle le deuxième matériau conducteur est présent en une quantité de 0,5 à 5 parties en poids, sur la base de 100 parties en poids de teneur en solides de la suspension d'électrode positive.

13. Suspension d'électrode positive selon la revendication 9, dans laquelle le deuxième matériau conducteur inclut un ou plusieurs éléments sélectionnés dans le groupe constitué de graphite naturel, graphite artificiel, noir d'acétylène, noir de carbone, Ketjen black et fibres de carbone.

14. Procédé de préparation d'une suspension d'électrode positive pour une batterie secondaire au lithium, comprenant :
le fait de mélanger un matériau actif d'électrode positive, un deuxième matériau conducteur et la pré-dispersion selon la revendication 1 pour préparer une suspension d'électrode positive.

15. Procédé selon la revendication 14, dans lequel le mélange pour préparer la suspension d'électrode positive comprend en outre :
le fait de mélanger le matériau actif d'électrode positive et le deuxième matériau conducteur sous pression atmosphérique pour préparer un liquide mélangé de matériau actif ; et
le fait de mélanger le liquide mélangé de matériau actif et la pré-dispersion sous vide pour préparer la suspension d'électrode positive.
